# EUROPEAN PATENT SPECIFICATION

(11) **EP 1 465 744 B1**
(45) Date of publication and mention of the grant of the patent: **31.05.2006**
(21) Application number: 02793635.0
(22) Date of filing: 11.12.2002
(51) Int. Cl.: B22F 3/105, B29C 67/00

(54) **A DEVICE AND METHOD FOR PRODUCING A PRODUCT BY FREE FORM FORMING**
VORRICHTUNG UND VERFAHREN ZUR HERSTELLUNG EINES PRODUKTS DURCH FREIFORMEN
DISPOSITIF ET PROCEDE DE PRODUCTION D'UN PRODUIT PAR FORMAGE DE FORME LIBRE

(30) Priority: 13.12.2001 SE 0104237
(43) Date of publication of application: 13.10.2004
(73) Proprietor: FCUBIC AB, 429 35 Kullavik (SE)
(72) Inventor: HARRYSSON, Urban, S-429 35 Kullavik (SE)
(74) Representative: Inger, Lars Ulf Bosson
(86) International application number: PCT/SE2002/002307
(87) International publication number: WO 2003/055628

(56) References cited:
- US-A- 5 155 321
- US-A- 5 155 324
- US-A- 5 427 733

## Description

### Field of the invention and prior art

The present invention relates to a device for manufacturing a product from a base material, including a means for applying superimposed layers of base material on a support and a member for binding together the base material in selected portions of the base material in order to form a continuous product from the base material, wherein the support, and thereby also the base material, and the binding member are arranged in a mutually displaceable way in order to deposit a medium in different positions of the base material by means of the binding member. Furthermore, the invention relates to a method for manufacturing a product from a base material, comprising to apply layers of base material on top of each other, to bind together the base material in selected portions of the same into a continuous product by means of using a binding member, and to displace the base material and the binding member mutually in accordance with a selected motion pattern in order to deposit a medium in different positions of the base material by means of the binding member.

The invention is applicable when manufacturing many different types of products, but in the following the application of manufacturing so-called FFF-articles (Free Form Fabrication), wherein powder granules are bonded into a solid product, will be described in an exemplifying but non-limiting way.

Production of FFF-articles can be done by means of depositing a powdered base material in thin layers and binding those portions which are to form the product. Accordingly, this implies that each base material layer can be said to constitute a cross section of the product. By means of binding together the powder within each respective layer and between the layers, a three-dimensional product is created by a number of layers. Different layers exhibiting different geometries and/or dimensions of the portions in question are bonded together in order to obtain the desired shape of the final product. Thereafter, the finished product is cleared of surrounding non-bonded base material.

US-A-5 427 733 discloses, transforming heat in the form of laser energy to those portions of a base powder material which are sintered to form a continuous product and scanning mirrors for the laser radiation being displaceable with respect to the base material as well as errors in the laser radiation being detected and compensated.

The binding of the base material can also be performed by means of supplying a medium, usually a liquid binding agent, to those portions of the base material which are to be bonded together. There is also a possibility to add a medium which in itself is not capable of binding the base material together, but which makes it possible to bind together the base material in those portions which have been prepared with the medium in a subsequent treatment, e.g. heat supply.

A binding member is used for distributing the medium to the portions in question of the base material, suitably a depositing member such as e.g. a controlled printhead which is displaced in relation to the base material while the medium is emitted from a plurality of nozzles of the printhead onto the desired positions. It is very important that this deposition of the medium occurs in such a way that no continuous defects, i.e. non-bonded areas, are created in the finished article. Even a non-bonded volume with a very small extension in one dimension may imply that the article obtains a structural strength which is far too low because of the non-bonded volume being present as a through crack.

Printheads which are utilised for printouts on paper solve the problem of avoiding errors, i.e. a deficient printing as a result of one or several nozzles of the printhead being out of operation, by means of performing the printing motion a plurality of times in substantially the same positions while the printhead is displaced a relatively small distance. The magnitude of the distance or displacement can be defined in relation to the printing resolution, i.e. the pitch with which it is possible to print. Such a displacement is equivalent to approximately one pitch, up to a few hundred pitches between each printing motion. This will be done independent of whether errors exist or not, and independent of the position of such errors, in such a way that the likelihood of a sufficiently high print quality becomes as desired.

However, especially for two reasons, the above mentioned general error compensation method utilised in e.g. inkjet printers or electrostatic printers for paper printouts is no good when manufacturing FFF-articles:
1. The quantity of applied binding agent is often of a vital importance for the quality of the finished product, which means that an arbitrary number of depositions cannot be performed in order to ensure that non-bonded areas do not arise, and
2. The method tends to be unable to compete with other manufacturing methods if the time which is consumed for the deposition of e.g. a binding agent exceeds a certain value, which is the reason why it is desirable to minimise the number of depositions while maintaining the required quality.

If the applied quantity of binding agent becomes too large, the finished article can obtain a defective shape, e.g. as a result of lateral leakage. If, on the other hand, the quantity of binding agent becomes too small, the bonded areas might become too small and non-bonded gaps may arise between the areas.

### Object of the invention and summary of the invention

A first object of the invention is to provide a device of the type defined by way of introduction, which device enables defects in the finished product to be predicted and avoided while, simultaneously, the operation of the means utilised for binding together the base material can be optimised when manufacturing a product from a base material, preferably in the form of a powder. This object is achieved by means of a device according to claim 1 in the present patent application.

A second object of the invention is to provide a method of the type defined by way of introduction, which method enables defects in the finished product to be predicted and avoided while, simultaneously, the operation of the means utilised for binding together the base material can be optimised when manufacturing a product from a base material, preferably in the form of a powder. This object is achieved by means of a method according to claim 10 in the present invention.

By means of detecting the errors which may occur in the binding member, there is a possibility to choose the optimum degree in which compensation for these errors should be performed during the production and the type of compensation which is to be performed in such a case. Thereby, there is a possibility to utilise additional information in combination with the knowledge about the detected errors, so that it becomes possible to calculate where the resulting defect will end up in the finished product in question if no compensation is performed and, consequently, there is a possibility to prioritise and adjust the compensation operation to particularly critical positions in the product.

Further advantages and features of the invention will become apparent from the following description and the attached dependent claims.

### Brief description of the drawings

A description in greater detail of exemplifying embodiments of the invention will follow below with reference to the attached drawings.

In the drawings:
Fig. 1 is a schematic top view of a device according to the invention;
Fig. 2 is a schematic view according to Fig. 1, illustrating the binding member and the detecting unit of the device in greater detail; and
Fig. 3 is a schematic cross-sectional view of Fig. 1, illustrating the base material layers present in this cross-section and defects present in these layers.

### Detailed description of preferred embodiments of the invention

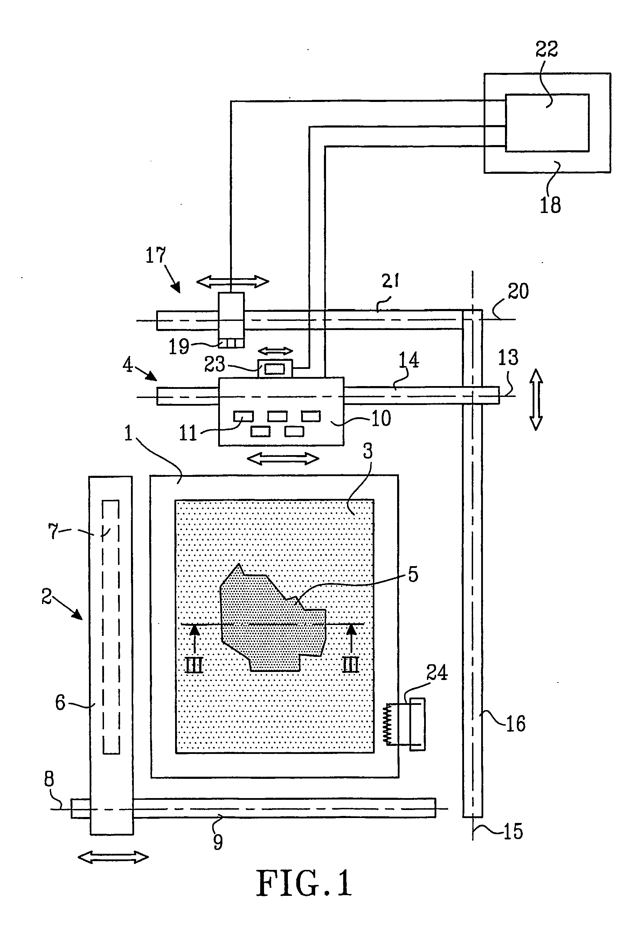

Fig. 1 is a schematic top view showing a support 1, a means for applying superimposed layers of a base material 3, preferably in the form of a powder but applications with a base material in the form of a liquid are also possible, on the support 1, and a member 4 for binding together the base material 3 in selected portions 5 of the base material 3 in order to form a continuous product from the powdered material. The application means 2 is designed for depositing the base material 3 on the support 1 in thin layers. In order to realise the deposition, the application means 2 can exhibit e.g. a container 6 with a nozzle 7 (indicated with a dashed line in Fig. 1) directed towards the support 1, in the form of an aperture through which base material can be applied on the support or on preceding base material layers. Furthermore, in this embodiment, the application means 2 and the support 1 are arranged in a mutually displaceable way, by means of the application means 2 being displaceable along a first axis 8 along a first rail 9, suitably by means of a motor and the requisite control equipment, with the object of applying the base material 3 during relative displacement of the application means 2 and the support 1.

However, it should be emphasised that the design of the application means 2 is not critical for implementing the invention, and that its design accordingly can be varied in a number of ways within the scope of the invention. For example, the application means can exhibit a scraper for a subsequent levelling of the applied powder material.

The binding member 4 and the support 1 are arranged in a mutually displaceable way in order to transfer energy to and/or deposit a medium in different positions of the base material by means of the binding member. The design of the binding member 4 is dependent on the method which is used for creating the final product.

These methods can be divided into two different main groups:
1. The binding member deposits a medium on the base material in the selected portions, such as a binding agent which binds together the powder granules, e.g. by means of gluing. In some cases, this binding can be supplemented with a subsequent treatment for additional curing of the binding agent.
2. The binding member deposits a medium on the base material in the selected portions which does not bind together the base material, but which prepares the base material in such a way that a binding of the base material is enabled in a subsequent treatment. The subsequent treatment can be e.g. heating of the base material, wherein the powder granules of the prepared portions are bonded together by means of adhesion, sintering or melting. Instead, it is also possible to prepare the other portions of the base material, which are not desired to be bonded together, in order to bind together the selected portions in the subsequent treatment whereas said other prepared portions remain non-bonded as a result of the deposited medium.

No matter which the method used for binding together the base material is, it is very important that the binding does not create defects in the product which could influence its structural strength in an unacceptable way.

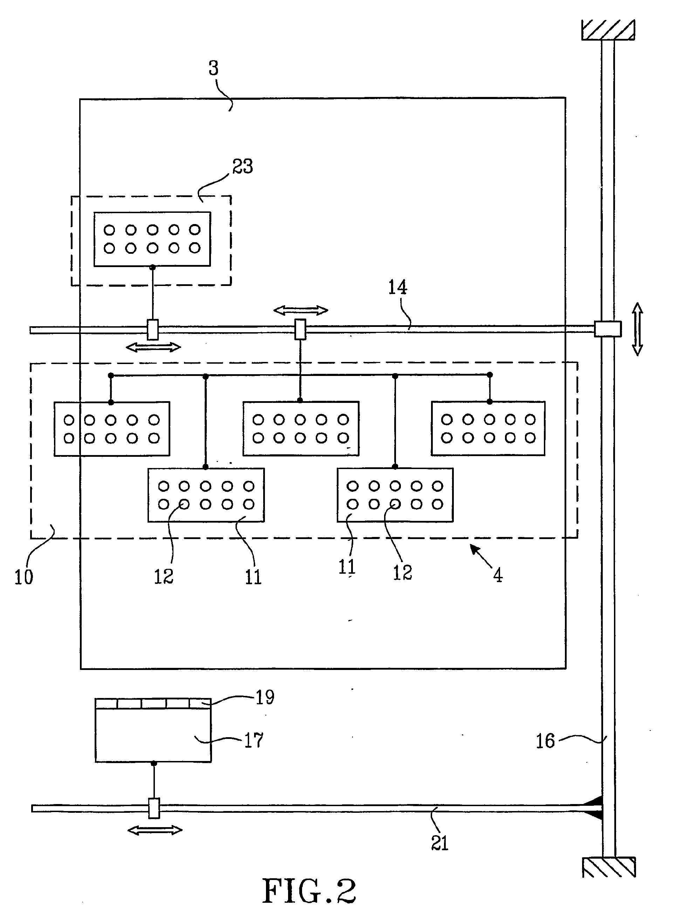

The binding member 4 in the illustrated embodiment comprises a device 10 for depositing a medium on the base material 3. The deposition can take place within said selected portions 5 in order to substantially immediately accomplish the binding of the base material, or in order to prepare the base material so that a binding of the base material in a subsequent treatment is enabled or, alternatively, within those areas of the base material which are outside said selected portions 5 in order to prevent binding in a subsequent treatment. The depositing device 10 can include a set of nozzles arranged in one or several arrays 11. In this embodiment, the depositing device includes a plurality of such arrays provided with nozzles 12 for emitting one or several media onto the base material 3. These nozzles 12 are illustrated schematically by means of two rows of circles in each respective array in Fig. 2.

The support 1, and thereby also the base material 3, and the binding member 4 are arranged in a mutually displaceable way in order to accomplish the binding in different positions of the base material 3. For this purpose, in the embodiment shown in Fig. 1, the binding member 4 can be displaced, suitably by means of a motor and associated control equipment, along a second axis 13 along a second rail 14, which second rail 14 in its turn can be displaced along a third axis 15 along a third rail 16 in a direction substantially perpendicular to the displacement direction of the binding member 4 along said second rail 14. In this way, the binding member 4 and the support 1 are arranged in order to be mutually displaceable in two dimensions in a plane parallel to the support, and thereby the energy transfer or the deposition of the medium can be performed in optional positions of the base material surface.

Suitably, the support is vertically adjustable in relation to the binding member 4 and the applicator means 2 in order to be capable of maintaining the distance in a vertical direction (see Fig. 1), i.e. in a direction perpendicular to the extension of the paper, between the binding member 4 and the uppermost base material layer, and also between the applicator means 2 and the uppermost base material layer, when performing repeated application of base material layers.

Furthermore, the device can be provided with a means 24 for transferring heat to the base material. The heat transfer means 24 can be placed, for example, inside the support 1 as a heating coil for selective heating of said selected portions 5 or of the base material as a whole.

Furthermore, the device includes a unit 17 according to the invention for detecting errors in the binding member 4, and a means 18 according to the invention for compensating for such errors, on the basis of detected errors, in a subsequent energy transfer to and/or deposition on the base material 3. The detecting unit 17 can be constituted of an optical instrument, such as one or several photocells 19, and is suitably arranged in order to be displaceable along a fourth axis 20 along a fourth rail 21 parallel to the displacement direction of the binding member 4 along said second axis 13. In this way, the detecting unit 17 and/or the binding member 4 can be displaced in such a way that they can be located in relative positions enabling an assessment of the function of the binding member 4 by means of the photocell/photocells 19 of the detecting unit 17.

Thereby, the compensating means 18 is suitably provided with a control equipment 22, which communicates with the binding member 4 and the detecting unit 17, and which is arranged to emit/receive signals to/from the detecting unit 17 and/or the binding member 4 for setting appropriate relative positions of the detecting unit 17 and the binding member 4 when detecting errors in the binding member 4.

The compensating member 18 can be arranged for displacing the relative positions and/or orientations of the binding member 4 and the base material 3 in at least one direction in order to compensate for said detected errors, i.e. for displacing the relative positions and/or orientations of the binding member 4 and the base material in one or several of six degrees of freedom (defined by three axes of translation and three axes of rotation) in order to compensate for said detected errors. In the illustrated embodiment, the compensating means 18 is arranged for displacing the relative positions of the binding member 4 and the base material 3 in a direction substantially perpendicular to the direction in which relative displacement of the binding member 4 and the base material 3 takes place during said energy transfer to and/or deposition on the base material. This means that the compensating means 18 is arranged for compensating for the detected errors in the binding member 4, on the basis of information from the detecting unit 17 and the binding member 4, by means of emitting control signals for adjusting the position of the binding member 4 along the second axis 13, i.e. in relation to the base material 3, so that when displacing the binding member 4 along the third axis 15, during energy transfer or deposition of the medium from the depositing device 10 of the binding member 4, it is ensured that energy transfer to and/or deposition on the base material takes place in the desired positions of the base material 3.

Accordingly, the compensation can be accomplished by means of an adjustment, e.g. in the form of a fine-adjustment, of the binding member 4 along said second axis 13. It is possible to perform this adjustment by means of the regular displacement gear for displacing the binding member 4 along said second axis 13, and/or by means of a separate displacement gear which can exhibit a smaller displacement range but which allows a more accurate adjustment than the regular displacement gear. Alternatively, or in combination with the above mentioned methods for compensation, one or several additional binding members 23 can be utilised for compensating for errors in the binding member 4 and eliminating defects in the final product.

In Figs. 1 and 2, such an additional binding member 23 is arranged in a displaceable way in relation to the binding member 4 in a direction parallel to said second axis 13.

The displacement of the binding member 4 in relation to its normal position in relation to the base material 3 which is performed for the compensation is often of the magnitude of one or a few pitches and up to a few hundred pitches, wherein a pitch defines the resolution with which it is possible to treat the base material by means of the binding member 4.

Fig. 2 is a schematic representation of the different displacement alternatives for the binding member 4, the additional binding member 23, and the detecting unit 17. The connections from the binding member 4 and the detecting unit 17 to the compensating means 18, and the compensating means 18 itself, are not shown in Fig. 2.

When utilising the method according to the invention, layers of a preferably powdered base material are applied on top of each other, and in selected portions of the base material this is bonded together into a continuous product by means of using the binding member 4, wherein the base material 3 and the binding member 4 are displaced mutually in accordance with a selected motion pattern in order to deposit a medium in different positions of the base material by means of the binding member 4 and, furthermore, in accordance with the method according to the invention, errors in the binding member are detected and, on the basis of the detected errors, compensation for such errors is performed during subsequent deposition on the base material. Within the scope of this, the method can be varied in may different ways. From now on, above all, three different variants which are advantageous for different applications will be described.

According to one embodiment of the method according to the invention, after accomplished displacement in accordance with said selected motion pattern, one or several additional such displacements including said compensation are performed before subsequent layers of base material are applied on the preceding base material layer. This is done if errors in the binding member 4 are detected, and these errors probably have caused one or several unacceptable defects in the product. Thereby, the binding member 4 is brought to scan over the base material layer 3 in the same motion pattern as in the preceding energy transfer or deposition, but while compensation is performed by means of the binding member being slightly displaced, advantageously in a direction perpendicular to the displacement direction of the binding member during the displacement in relation to the base material, in relation to the previous motion pattern.

In accordance with another embodiment of the method according to the invention, after accomplished displacement in accordance with said selected motion pattern, one or several additional layers of base material are applied on the preceding base material layer before another such displacement including said compensation is performed. This is done if errors in the binding member 4 are detected and these would cause one or several unacceptable defects in the product in case the deposition repeatedly are performed with errors present in the binding member 4. This method is suitable for use if the errors arise in less defect-sensitive areas, where it is still desirable to avoid that the errors repeat themselves and turn up again substantially in the same positions in the X, Y-plane, i.e. in a plane parallel to the support 1, at different positions vertically (perpendicularly to the extension of the paper).

In accordance with still another embodiment of the method according to the invention, an additional binding member 23, displaceable in relation to said binding member 4, is utilised for accomplishing said compensation. This is suitable if errors in the binding member 4 have been detected, and these probably may have caused unacceptable defects in the product in defect-sensitive areas and, simultaneously, there are demands for a high production rate. By means of adjusting the additional binding member in relation to the main binding member 4 so that said additional binding member 23 is arranged in the defect-sensitive area and/or where the main binding member 4 exhibits errors, it can be compensated in advance for errors and without requiring that the binding member scans two or several times across the same base material layer with substantially the same motion pattern.

In case too many errors are detected in the binding member 4 so that a desired result cannot be obtained in spite of the compensation possibility, suitably some kind of automatic or manual restoration is utilised, e.g. cleaning of nozzles, of positions of the binding member which are out of order, and/or exchange of parts of the binding member or the binding member in its entirety.

The optical gauge 17, 19 can be arranged at the binding member 4 for detecting a presence or an absence of the medium emitted from the depositing device 10 included in the binding member at one or several of the nozzles 12. When detecting emitted medium, the gauge can be arranged for determining at least one property of the medium related to the function of the depositing device 10 when such medium is present. Thereby, the properties of the droplets of medium can be measured, such as size, direction, velocity, and/or time delay between the control signal for generating a droplet and the actual generation of the droplet. Measurements can be performed in one position or simultaneously in several positions and, by means of stepwise displacement of the detecting unit 17 in relation to the binding member 4, detection and associated measurements can be performed in all positions of the binding member.

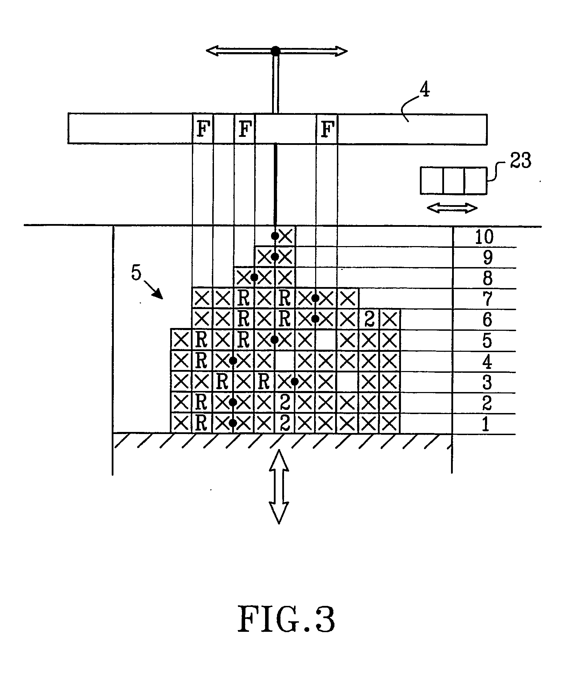

Fig. 3 is a highly schematic representation of a product which has been approved in accordance with certain given criteria, and the different methods utilised in order to obtain this product. Fig. 3 can be regarded as a partial cross section of a device according to claim 1. The binding member 4, exhibiting three defective positions F in this cross section, and an additional binding member 23, exhibiting three positions to be used for compensation, are located above the deposited base material layers (numbered 1-10).

Other device limitations are assumed to be that the binding member 4 is displaceable ± 2 positions, whereas the additional binding member 23 is displaceable along the main binding member 4 in its entirety.

The different base material layers illustrated with squares are, schematically, divided into units which can be treated by a corresponding position in the array of the binding member 4.

The demands made on the product before it can be granted approval are assumed to be that there are no long through-areas which are non-treated, and that all external surfaces should exhibit at least two flawless units directly inside these. The scans by means of the binding member in the intended motion pattern are performed repeatedly in a direction perpendicular to the extension of the paper.

In Fig. 3, the following reference marks have been used:
F= errors in a position of the main binding member 4,
X= the main binding member 4 has performed the requisite deposition of medium on the base material layer in question,
R= the additional binding member 23 has performed the requisite deposition of medium on the base material in question,
2= the position has been treated by means of the binding member or the additional binding member in a second scan across the same position,
•= the location of the centre of the binding member 4 during each respective scan.

On the right hand side of fig. 3, the base material in question is listed. Layers 1 and 2 require two scans, since these layers have to be flawless in accordance with the given criteria. In layers 3, 4 and 5, both the additional binding member 23 and compensation by means of displacing the binding member 4 between the layers are utilised. This results in non-treated positions (empty units in Fig. 3) in non-sensitive positions. In layer 6, both two scans and the additional binding member 23 are utilised. In layer 7, there is a sufficient compensation by means of the additional binding member 23, and finally, in layers 8, 9, 10 it is sufficient to compensate by means of displacing the main binding member 4.

## Claims

1. A device for manufacturing a product from a base material,
comprising a means (2) for applying superimposed layers of base material (3) on a support (1) and a member (4) for binding together the base material in selected portions (5) of the base material in order to form a continuous product from the base material,
wherein the support, and thereby the base material, and the binding member are arranged in a mutually displaceable way in order to deposit a medium in different positions of the base material by means of the binding member,
wherein the device includes a unit (17) for detecting errors in the binding member (4), and a means (18) for compensating for such errors on the basis of detected errors in subsequent deposition on the base material (3).

2. Device according to claim 1,
**characterised in that** the compensating means (18) is arranged for displacing the relative positions and/or orientations of the binding member (4) and the base material (3) in at least one direction in order to compensate for said detected errors.

3. Device according to claim 2,
**characterised in that** the compensating means (18) is arranged for displacing the relative positions of the binding member (4) and the base material (3) in a direction substantially perpendicular to the direction in which relative displacement of the binding member and the base material takes place during said deposition on the medium.

4. Device according to claim 1, 2 or 3,
**characterised in that** the detecting unit (17) comprises an optical instrument (19) for detecting said errors in the binding member (4).

5. Device according to any one of claims 1-4,
**characterised in that** the binding member (4) includes a device (10) for depositing the medium on the base material within said selected portions (5) in order to substantially immediately accomplish the binding of the base material (3) or for preparing the base material so that a binding of the base material in a subsequent treatment is enabled.

6. Device according to claim 5,
**characterised in that** the depositing device (10) exhibits a plurality of nozzles (12), arranged in one or several arrays (11), for emitting the medium.

7. Device according to any one of claims 1-6,
**characterised in that** the device includes a means (24) for transferring heat to the base material.

8. Device according to claim 4 and 6,
**characterised in that** said optical instrument (19) is an optical gauge arranged at the depositing device (10) for detecting a presence or an absence of medium emitted from the depositing device at one or several of the nozzles (12).

9. Device according to claim 8,
**characterised in that** the optical gauge (19), in the presence of emitted medium, is arranged for determining at least one property of the medium which is related to the function of the depositing device.

10. A method for manufacturing a product from a base material, comprising:
to apply layers of base material (3) on top of each other;
to bind the base material together in selected portions thereof Into a continuous product by means of using a binding member (4),
wherein
the base material and the binding member are displaced mutually in accordance with a selected motion pattern in order to deposit a medium in different positions of the base material by means of the binding member,
wherein errors in the binding member are detected, and
compensation for such errors, on the basis of detected errors, is performed in subsequent deposition on the base material.

11. Method according to claim 10,
**characterised in that**
the relative positions and/or orientations of the binding member (4) and the base material (3) are displaced in at least one direction in order to accomplish said compensation.

12. Method according to claim 11,
**characterised in that**
the relative positions of the binding member (4) and the base material (3) are displaced in a direction substantially perpendicular to the direction in which relative displacement of the binding member and the base material takes place in accordance with said selected motion pattern during said deposition on the base material.

13. Method according to claim 10, 11, or 12,
**characterised in that**
one or several additional such displacements including said compensation are performed after an accomplished displacement in accordance with said selected motion pattern, before subsequent layers of base material are applied on the preceding base material layer.

14. Method according to claim 10, 11 or 12,
**characterised in that**
one or several additional layers of base material is/are applied on the preceding base material layer after an accomplished displacement in accordance with said selected motion pattern, before another such displacement including said compensation is performed.

15. Method according to any one of claims 10-14,
**characterised in that**
the base material is bonded together, or prepared in such a way that a binding of the base material in a subsequent treatment is enabled, by means of depositing the medium on the base material within said selected portions by means of a depositing device (10) included in the binding member.

16. Method according to claim 15,
**characterised in that**
a presence or an absence of medium emitted from the depositing device (10) is detected at one or several positions of the depositing device in order to detect said errors in the binding member (4).

17. Method according to claim 16,
**characterised in that**
at least one property of the medium which is related to the function of the depositing device (10) is determined in the presence of emitted medium.

18. Method according to any one of claims 10-17,
**characterised in that**
an additional binding member (23), displaceable in relation to said binding member (4), is utilised in order to accomplish said compensation.

19. Method according to claim 18,
**characterised in that**
the relative positions and/or orientations of said additional binding member (23) and said binding member (4) are adjusted on the basis of said detected errors in order to accomplish the compensation.

20. Method according to claim 19,
**characterised in that**
the relative positions of said additional binding member (23) and the binding member (4), along an extension in a direction substantially perpendicular to the direction in which relative displacement of the binding member and the base material takes place during said energy transfer to and/or deposition on the base material, are adjusted on the basis of said detected errors in order to accomplish the compensation.

21. Method according to any one of claims 10-20,
**characterised in that**
heat is transferred to the base material in order to accomplish the binding.

22. Method according to claim 21,
**characterised in that**
thermal energy is transferred to said selected portions of the base material in order to accomplish the binding.

## Patentansprüche

1. Vorrichtung für die Herstellung eines Erzeugnisses aus einem Trägermaterial, umfassend ein Mittel (2) für das Aufbringen von übereinander liegenden Schichten von Trägermaterial (3) auf eine Auflage (1) und ein Element (4) für das Verbinden des Trägermaterials in ausgewählten Abschnitten (5) des Trägermaterials, um aus dem Trägermaterial ein durchgehendes Erzeugnis auszubilden, wobei die Auflage und dadurch das Trägermaterial und das Bindeelement in einer gegenseitig verschiebbaren Art und Weise angeordnet sind, um ein Medium in verschiedenen Positionen des Trägermaterials mit Hilfe des Bindeelements aufzubringen,
wobei die Vorrichtung eine Einheit (17) für das Feststellen von Fehlern im Bindeelement (4) und ein Mittel (18) für das Ausgleichen derartiger Fehler auf der Grundlage festgestellter Fehler beim nachfolgenden Aufbringen auf das Trägermaterial (3) einschließt.

2. Vorrichtung nach Anspruch 1, **dadurch gekennzeichnet, dass** das Ausgleichsmittel (18) angeordnet ist für das Verschieben der relativen Positionen und/oder Ausrichtungen des Bindeelements (4) und des Trägermaterials (3) in zumindest einer Richtung für das Ausgleichen der festgestellten Fehler.

3. Vorrichtung nach Anspruch 2, **dadurch gekennzeichnet, dass** das Ausgleichsmittel (18) angeordnet ist für das Verschieben der relativen Positionen des Bindeelements (4) und des Trägermaterials (3) in einer Richtung, die im Wesentlichen senkrecht zu der Richtung ist, in welcher die relative Verschiebung des Bindeelements und des Trägermaterials während des Aufbringens auf dem Medium erfolgt.

4. Vorrichtung nach Anspruch 1, 2 oder 3, **dadurch gekennzeichnet, dass** die Feststellungseinheit (17) ein optisches Instrument (19) für die Feststellung der Fehler in dem Bindeelement (4) umfasst.

5. Vorrichtung nach einem der Ansprüche 1 bis 4, **dadurch gekennzeichnet, dass** das Bindeelement (4) eine Vorrichtung (10) für das Aufbringen des Mediums auf dem Trägermaterial innerhalb der ausgewählten Abschnitte (5) einschließt, um im Wesentlichen unverzüglich das Binden des Trägermaterials (3) zu vollziehen oder um das Trägermaterial dergestalt vorzubereiten, dass ein Binden des Trägermaterials bei einer nachfolgenden Behandlung ermöglicht wird.

6. Vorrichtung nach Anspruch 5, **dadurch gekennzeichnet, dass** die Aufbringungsvorrichtung (10) eine Vielzahl von Düsen (12) für die Ausgabe des Mediums aufweist, die in einer oder in mehreren Gruppierungen (11) angeordnet sind.

7. Vorrichtung nach einem der Ansprüche 1 bis 6, **dadurch gekennzeichnet, dass** die Vorrichtung ein Mittel (24) für die Übertragung von Wärme auf das Trägermaterial einschließt.

8. Vorrichtung nach Anspruch 4 und 6, **dadurch gekennzeichnet, dass** das optische Instrument (19) ein optisches Messelement ist, welches an der Aufbringungsvorrichtung (10) angeordnet ist, um ein Vorhandensein oder ein Nichtvorhandensein des Mediums festzustellen, das aus der Aufbringungsvorrichtung an einer oder mehr der Düsen (12) ausgegeben wird.

9. Vorrichtung nach Anspruch 8, **dadurch gekennzeichnet, dass** das optische Messelement (19), beim Vorhandensein von ausgegebenem Medium, angeordnet ist für die Bestimmung zumindest einer Eigenschaft des Mediums, welche in Beziehung zur Funktion der Aufbringungsvorrichtung steht.

10. Ein Verfahren für die Herstellung eines Erzeugnisses aus einem Trägermaterial, umfassend:
Aufbringen von Schichten des Trägermaterials (3) übereinander;
Verbinden des Trägermaterials miteinander in ausgewählten Abschnitten desselben zu einem durchgehenden Erzeugnis mit Hilfe der Verwendung eines Bindeelements (4),
wobei
das Trägermaterial und das Bindeelement gegenseitig in Übereinstimmung mit einem ausgewählten Bewegungsmuster verschoben werden, um ein Medium in verschiedenen Positionen des Trägermaterials mit Hilfe des Bindeelements aufzubringen,
wobei Fehler im Bindeelement festgestellt werden, und
das Ausgleichen dieser Fehler, auf der Grundlage festgestellter Fehler, beim nachfolgenden Aufbringen auf das Trägermaterial vorgenommen wird.

11. Verfahren nach Anspruch 10, **dadurch gekennzeichnet, dass** die relativen Positionen und/oder Ausrichtungen des Bindeelements (4) und des Trägermaterials (3) in zumindest einer Richtung verschoben werden, um das Ausgleichen vorzunehmen.

12. Verfahren nach Anspruch 11, **dadurch gekennzeichnet, dass** die relativen Positionen des Bindeelements (4) und des Trägermaterials (3) in einer Richtung verschoben werden, die im Wesentlichen senkrecht zu der Richtung ist, in welcher die relative Verschiebung des Bindeelements und des Trägermaterials in Übereinstimmung mit dem gewählten Bewegungsmuster während des Aufbringens auf dem Trägermaterial erfolgt.

13. Verfahren nach Anspruch 10, 11 oder 12, **dadurch gekennzeichnet, dass** eine oder mehr zusätzliche Verschiebungen, einschließlich des Ausgleichens, nach einer vollzogenen Verschiebung in Übereinstimmung mit dem gewählten Bewegungsmuster vorgenommen werden, ehe nachfolgende Schichten von Trägermaterial auf die vorangehende Schicht Trägermaterial aufgebracht werden.

14. Verfahren nach Anspruch 10, 11 oder 12, **dadurch gekennzeichnet, dass** eine zusätzliche Schicht oder mehr zusätzliche Schichten Trägermaterial auf die vorangehende Trägermaterial-Schicht aufgebracht wird/werden nach einer vollzogenen Verschiebung in Übereinstimmung mit dem gewählten Bewegungsmuster, ehe eine weitere solche Verschiebung, einschließlich des Ausgleichens, vorgenommen wird.

15. Verfahren nach einem der Ansprüche 10 bis 14, **dadurch gekennzeichnet, dass** das Trägermaterial miteinander verbunden wird oder in einer solchen Weise vorbereitet wird, dass ein Verbinden des Trägermaterials bei einer nachfolgenden Behandlung ermöglicht wird, durch das Aufbringen des Mediums auf dem Trägermaterial innerhalb der ausgewählten Abschnitte mit Hilfe einer Aufbringungsvorrichtung (10), die im Bindeelement eingeschlossen ist.

16. Verfahren nach Anspruch 15, **dadurch gekennzeichnet, dass** ein Vorhandensein oder ein Nichtvorhandensein des Mediums, das aus der Aufbringungsvorrichtung (10) ausgegeben wird, an einer oder mehr Positionen der Aufbringungsvorrichtung festgestellt wird, um die Fehler im Bindeelement (4) festzustellen.

17. Verfahren nach Anspruch 16, **dadurch gekennzeichnet, dass** zumindest eine Eigenschaft des Mediums, welche in Beziehung zur Funktion der Aufbringungsvorrichtung (10) steht, beim Vorhandensein von ausgegebenem Medium bestimmt wird.

18. Verfahren nach einem der Ansprüche 10 bis 17, **dadurch gekennzeichnet, dass** ein zusätzliches Bindeelement (23), verschiebbar in Bezug auf das Bindeelement (4), genutzt wird, um das Ausgleichen auszuführen.

19. Verfahren nach Anspruch 18, **dadurch gekennzeichnet, dass** die relativen Positionen und/oder Ausrichtungen des zusätzlichen Bindeelements (23) und des Bindeelements (4) auf der Grundlage der festgestellten Fehler angepasst werden, um das Ausgleichen auszuführen.

20. Verfahren nach Anspruch 19, **dadurch gekennzeichnet, dass** die relativen Positionen des zusätzlichen Bindeelements (23) und des Bindeelements (4), entlang einer Ausdehnung in einer Richtung, die im Wesentlichen senkrecht zu der Richtung ist, in welcher die relative Verschiebung des Bindeelements und des Trägermaterials während der Energieübertragung auf das Trägermaterial und/oder des Aufbringens auf dieses erfolgt, auf der Grundlage der festgestellten Fehler angepasst werden, um das Ausgleichen auszuführen.

21. Verfahren nach einem der Ansprüche 10 bis 20, **dadurch gekennzeichnet, dass** Wärme auf das Trägermaterial übertragen wird, um das Verbinden zu vollziehen.

22. Verfahren nach Anspruch 21, **dadurch gekennzeichnet, dass** Wärmeenergie auf die ausgewählten Abschnitte des Trägermaterials übertragen wird, um das Verbinden zu vollziehen.

## Revendications

1. Dispositif pour fabriquer un produit à partir d'une matière de base, comprenant un moyen (2) pour appliquer des couches superposées de matière de base (3) sur un support (1) et un organe (4) pour faire se lier la matière de base dans des portions choisies (5) de la matière de base de manière à former un produit continu à partir de la matière de base, dans lequel le support, et de ce fait la matière de base, et l'organe de liaison, sont agencés d'une manière mutuellement déplaçable de manière à déposer un milieu en différentes positions de la matière de base au moyen de l'organe de liaison, dans lequel le dispositif comprend une unité (17) de détection d'erreurs dans l'organe de liaison (4), et un moyen (18) de correction de ces erreurs sur la base d'erreurs détectées dans un dépôt consécutif sur la matière de base (3).

2. Dispositif selon la revendication 1, ***caractérisé en ce que*** le moyen correcteur (18) est agencé pour déplacer les positions relatives de l'organe de liaison (4) et de la matière de base dans une direction au moins, de manière à corriger lesdites erreurs détectées.

3. Dispositif selon la revendication 2, ***caractérisé en ce que*** le moyen correcteur (18) est agencé pour déplacer les positions et/ou orientations relatives de l'organe de liaison (4) et de la matière de base dans une direction sensiblement perpendiculaire à la direction dans laquelle le déplacement relatif de l'organe de liaison et de la matière de base se produit pendant ledit dépôt sur la matière de base.

4. Dispositif selon la revendication 1, 2 ou 3, ***caractérisé en ce que*** l'unité de détection (17) comprend un instrument optique (19) pour détecter lesdites erreurs dans l'organe de liaison (4).

5. Dispositif selon l'une quelconque des revendications 1 à 4, ***caractérisé en ce que*** l'organe de liaison (4) comprend un dispositif pour déposer le milieu sur la matière de base dans lesdites portions sélectionnées (5) de manière à accomplir sensiblement immédiatement la liaison de la matière de base (3) ou pour préparer la matière de base de telle sorte qu'une liaison de la matière de base dans un traitement consécutif soit rendue possible.

6. Dispositif selon la revendication 5, ***caractérisé en ce que*** le dispositif (10) de dépôt présente une pluralité de buses (12), disposées selon un ou plusieurs ensembles (11), pour émettre le milieu.

7. Dispositif selon l'une quelconque des revendications 1 à 6, ***caractérisé en ce que*** le dispositif comprend un moyen (24) pour transférer de la chaleur à la matière de base.

8. Dispositif selon les revendications 4 et 6, ***caractérisé en ce que*** ledit instrument optique (19) est un calibre optique placé au niveau du dispositif (10) de dépôt pour détecter une présence ou une absence de milieu émis depuis le dispositif de dépôt par l'une ou plusieurs des buses (12).

9. Dispositif selon la revendication 8, ***caractérisé en ce que*** le calibre optique (19), en présence de milieu émis, est agencé pour déterminer au moins une propriété du milieu qui est liée à la fonction du dispositif de dépôt.

10. Procédé de fabrication d'un produit à partir d'une matière de base, comprenant :
l'application de couches de matière de base (3) les unes au-dessus des autres ;
la liaison de la matière de base dans des portions sélectionnées de celle-ci en un produit continu par utilisation d'un organe de liaison (4),
dans lequel
la matière de base et l'organe de liaison sont déplacés mutuellement selon un schéma de déplacement sélectionné de manière à déposer un milieu dans différentes positions de la matière de base au moyen de l'organe de liaison,
dans lequel des erreurs dans l'organe de liaison sont détectées, et
une correction de ces erreurs, sur la base des erreurs détectées, est effectuée lors d'un dépôt consécutif sur la matière de base.

11. Procédé selon la revendication 10,
***caractérisé en ce que***
les positions relatives de l'organe de liaison (4) et de la matière de base (3) sont déplacées dans une direction au moins, de manière à réaliser ladite correction.

12. Procédé selon la revendication 11,
***caractérisé en ce que***
les positions et/ou orientations relatives de l'organe de liaison (4) et de la matière de base (3) sont déplacées dans une direction sensiblement perpendiculaire à la direction dans laquelle le déplacement relatif de l'organe de liaison et de la matière de base se produit selon ledit schéma de déplacement sélectionné pendant ledit dépôt sur la matière de base.

13. Procédé selon la revendication 10, 11 ou 12,
***caractérisé en ce que***
un ou plusieurs de ces déplacements supplémentaires comprenant ladite correction sont effectués après un déplacement accompli selon ledit schéma de déplacement choisi, avant que des couches consécutives de matière de base ne soient appliquées sur la couche de matière de base précédente.

14. Procédé selon la revendication 10, 11 ou 12,
***caractérisé en ce que***
une ou plusieurs couches supplémentaires de matière de base est/sont appliquées sur la couche de matière de base précédente après un déplacement accompli selon ledit schéma de déplacement sélectionné, mais avant qu'un autre déplacement englobant ladite correction ne soit effectué.

15. Procédé selon l'une quelconque des revendications 10 à 14,
***caractérisé en ce que***
la matière de base est liée, ou préparée de telle manière qu'une liaison de la matière de base lors d'un traitement consécutif soit permise, par dépôt du milieu sur la matière de base dans lesdites portions sélectionnés, au moyen d'un dispositif (10) de dépôt englobé dans l'organe de liaison.

16. Procédé selon la revendication 15,
***caractérisé en ce que***
une présence ou une absence de milieu émis à partir du dispositif (10) de dépôt est détectée dans l'une ou plusieurs positions du dispositif de dépôt, de manière à détecter lesdites erreurs dans l'organe de liaison (4).

17. Procédé selon la revendication 16,
***caractérisé en ce que***
au moins une propriété du milieu qui est liée à la fonction du dispositif (10) de dépôt est déterminée en présence du milieu émis.

18. Procédé selon l'une quelconque des revendications 10 à 17,
***caractérisé en ce que***
un organe de liaison supplémentaire (23), déplaçable en relation avec ledit organe de liaison (4), est utilisé pour accomplir ladite correction.

19. Procédé selon la revendication 18,
***caractérisé en ce que***
les positions et/ou les orientations relatives dudit organe de liaison supplémentaire (23) et dudit organe de liaison (4) sont ajustées sur la base desdites erreurs détectées de manière à accomplir la correction.

20. Procédé selon la revendication 19,
***caractérisé en ce que***
les positions relatives dudit organe de liaison supplémentaire (23) et de l'organe de liaison (4), sur une extension dans une direction sensiblement perpendiculaire à la direction dans laquelle a lieu le déplacement relatif de l'organe de liaison et de la matière de base pendant ledit transfert d'énergie et/ou le dépôt sur la matière de base, sont ajustées sur la base desdites erreurs détectées de manière à accomplir la correction.

21. Procédé selon l'une quelconque des revendications 10 à 20,
***caractérisé en ce que***
de la chaleur est transférée à la matière de base de manière à accomplir la liaison.

22. Procédé selon la revendication 21,
***caractérisé en ce que***
l'énergie thermique est transférée auxdites portions sélectionnées de la matière de base de manière à accomplir la liaison.
